Europäisches Patentamt

European Patent Office

Office européen des brevets

(19)

(11) Veröffentlichungsnummer: **0 151 913**
**A2**

(12) # EUROPÄISCHE PATENTANMELDUNG

(21) Anmeldenummer: 84890246.6

(22) Anmeldetag: 17.12.84

(51) Int. Cl.⁴: **B 23 Q 7/00**

(30) Priorität: 10.02.84 AT 428/84

(43) Veröffentlichungstag der Anmeldung:
21.08.85 Patentblatt 85/34

(84) Benannte Vertragsstaaten:
BE CH DE FR GB IT LI LU NL SE

(71) Anmelder: VOEST-ALPINE Aktiengesellschaft
Muldenstrasse 5
A-4020 Linz(AT)

(72) Erfinder: Wögerer, Wolfgang
Nr. 3
A-4252 Liebenau(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) Vorrichtung zum Zuführen plattenförmiger Werkstücke zu einer Werkzeugmaschine.

(57) Zum Zuführen von Werkstücken (1) zu einer Wekzeugmaschine ist ein Gestell (2) mit einer Geradführung (3) für
einen Längsschlitten (4) vorgesehen, der einen Querförderer
(5) für die Werkstücke (1) trägt.

Um eine gute Werkstückabstützung zu erhalten, besteht
der Querförderer (5) aus wenigstens zwei in Förderrichtung
hintereinander angeordneten, ein Auflager für die Werkstücke (1) bildenden Endlosförderern (6a, 6b), die mit einem für
den Werkzeugeinsatz der Werkzeugmaschine ausreichenden
Abstand voneinander angeordnet sind oder von denen
wenigstens einer auf einem Träger (7) gelagert ist, der in
Förderrichtung der Endlosförderer (6a, 6b) auf dem Längsschlitten (4) verstellbar geführt ist.

EP 0 151 913 A2

./...

**0151913**

## Vorrichtung zum Zuführen plattenförmiger Werkstücke zu einer Werkzeugmaschine

Die Erfindung bezieht sich auf eine Vorrichtung zum Zuführen plattenförmiger Werkstücke zu einer Werkzeugmaschine, bestehend aus einem Gestell und einem entlang einer Geradführung auf dem Gestell verfahrbaren Längsschlitten, der einen Querförderer für die Werkstücke trägt.

Da die Werkzeuge zum Schneiden, Stanzen oder Bohren der Werkstücke einen entsprechenden Arbeitsraum benötigen, weist der zur Führung der Werkstücke vorgesehene Tisch bei bekannten Vorrichtungen eine Ausnehmung im Werkzeugbereich der Werkzeugmaschine auf, so daß hinsichtlich des Werkzeugeinsatzes vorteilhafte Verhältnisse vorliegen. Nachteilig ist allerdings, daß das Werkstück gegenüber dem Tisch verschoben werden muß, was die Gefahr von Oberflächenbeschädigungen für das Werkstück mit sich bringt.

Um diesen Nachteil zu vermeiden, ist bereits eine Vorrichtung bekanntgeworden (DE-OS 31 41 305), bei der das zu bearbeitende Werkstück auf einem am Tisch abgestützten Rost aufliegt, der mit Hilfe einer Stelleinrichtung in zwei Achsen bewegt werden kann. Zu diesem Zweck ist ein auf dem Tisch entlang einer Geradführung verfahrbarer Längsschlitten vorgesehen, auf dem ein Querschlitten mit Mitnehmerzangen für den Rost gelagert ist. Der Rost kann folglich über den Längsschlitten in der einen Achse und über den Querschlitten in der anderen Achse bewegt werden, so daß das Werkstück ohne Verschiebung gegenüber seinem Auflager in die jeweilige Bearbeitungsstellung gebracht werden kann. Nachteilig bei dieser bekannten Vorrichtung ist allerdings, daß der Vorteil einer Werkstückverstellung ohne Beschädigungsgefahr für die Werkstückoberfläche damit erkauft wird, daß der Bearbeitungsraum für den Einsatz der Werkzeuge durch den Rost beeinträchtigt wird. Diese Beeinträchtigung führt soweit, daß kein Werkzeug eingesetzt werden kann, das ein Gegenwerkzeug verlangt.

Zum Sortieren von Poststücken od. dgl. ist schließlich ein Förderer bekanntgeworden (US-PS 4 096 936), bei dem mehrere unmittelbar nebeneinandergereihte Querförderer einen mehrgliedrigen Längsschlitten bilden, der auf einer Schiene verfahren werden kann. Je nach der Förderrichtung der einzelnen Querförderer, die jeweils aus einem endlosen Förderband bestehen, können die zu sortierenden Poststücke auf die eine oder andere Längsseite des Schlittens gefördert und in entsprechende Aufnahmen abgeworfen werden. Diese bekannte Fördereinrichtung erlaubt eine Gutbewegung in zwei zueinander senkrechten Koordinatenachsen, wobei sich zufolge der unmittelbar nebeneinandergereihten Querförderer eine im wesentlichen geschlossene Auflagefläche für die Gutstücke ergibt, so daß eine solche Fördereinrichtung zum Zuführen plattenförmiger Werkstücke zu einer Werkzeugmaschine völlig ungeeignet ist, weil eben kein Freiraum für den Werkzeugeinsatz vorgesehen werden kann.

Der Erfindung liegt somit die Aufgabe zugrunde, eine Vorrichtung der eingangs geschilderten Art so zu verbessern, daß der Vorteil eines unbehinderten Bearbeitungsraumes für die verwendeten Werkzeuge mit dem Vorteil einer Werkstückführung ohne Relativbewegung zwischen Werkstück und Auflage verbunden werden kann, und zwar unter Wahrung einer guten Werkstückabstützung.

Die Erfindung löst die gestellte Aufgabe dadurch, daß der Querförderer wenigstens zwei in Förderrichtung hintereinander angeordnete, ein Auflager für die Werkstücke bildende Endlosförderer umfaßt, die mit einem für den Werkzeugeinsatz der Werkzeugmaschine ausreichenden Abstand voneinander angeordnet sind oder von denen wenigstens einer auf einem Träger gelagert ist, der in Förderrichtung der Endlosförderer auf dem Längsschlitten verstellbar geführt ist.

Da der Querförderer aus wenigstens zwei hintereinander angeordneten, ein Auflager für die Werkstücke bildenden Endlosförderern besteht, kann jedes Werkstück quer zur Geradführung des Längsschlittens bewegt werden, ohne die Lage des Querförderers auf dem Längsschlitten verändern zu müssen. Die Werkstücke werden dabei von den umlaufenden Förderelementen, die vorteilhaft aus Förderbändern gebildet werden, schlupffrei mitgenommen, so daß zwischen den an den Werkstücken anliegenden Förderelementen und den Werkstücken keine die Gefahr einer Oberflächenbeschädigung bildenden Relativbewegungen auftreten können. Die Anordnung der Endlosförderer auf dem Längsschlitten kann somit auf die durch den Werkzeugeinsatz bedingten Raumbedürfnisse abgestimmt werden. Diese Abstimmung kann dadurch erfolgen, daß entweder die Endlosförderer mit einem Abstand hintereinander angeordnet sind, der dem Raumbedarf der Werkzeuge der Werkzeugmaschine genügt, oder daß die Endlosförderer im Werkzeugbereich entsprechend auseinander gestellt werden, indem zumindest der Endlosförderer auf der einen Seite des Schlittens auf einem in Förderrichtung des Querförderers verstellbaren Träger gelagert ist. Wird der Längsschlitten gegen das Werkzeug hin verfahren, so befindet sich das Werkzeug der Werkzeugmaschine stets in einem ausreichenden Abstandsbereich zwischen den Endlosförderern, unabhängig davon, ob die Endlosförderer von vornherein in einem solchen Abstand voneinander angeordnet sind oder im Bereich des Werkzeuges auf diesen Abstand auseinander gestellt werden. Bei der Verstellung der Träger für die Endlosförderer wird die Lage der am Werkstück anliegenden Förderelemente gegenüber dem Werkstück nicht verändert, weil der Antrieb der Förderelemente auf die Werkstückförderung und nicht auf die Trägerverstellung abgestimmt sein muß. Bei unveränderter Lage des Werkstückes gegenüber dem Längsschlitten können somit die hintereinander angeordneten Endlosförderer auseinanderbewegt werden, um zwischen sich den für den Werkzeugeinsatz erforderlichen Freiraum sicherzustellen.

Das Auseinanderbewegen der Endlosförderer, bevor sie in den Werkzeugbereich gelangen, bringt den Vorteil mit sich, daß die Werkstücke außerhalb des Werkzeugbereiches im wesentlichen durchgehend abgestützt werden können, was bei einer Anordnung der Endlosförderer mit einem vorbestimmten Abstand nicht der Fall ist. Dieser Vorteil kommt insbesondere dann zum Tragen, wenn mehrere einander paarweise gegenüberliegende Endlosförderer mit je einem verstellbaren Träger vorgesehen sind. Durch das Nebeneinanderreihen von mehreren Endlosförderern wird es möglich, lediglich die sich jeweils im Werkzeugbereich befindlichen Endlosförderer aus dem Werkzeugbereich zu bewegen, so daß das Werkstück auf den übrigen nicht auseinander bewegten Endlosförderern durchgehend aufliegen kann. Das Verstellen beider Gruppen von Endlosförderern bedingt für die beiden Gruppen von Endlosförderern jeweils nur einen vergleichsweise kurzen Stellweg, was unter anderem höhere Stellgeschwindigkeiten sicherstellt.

Besonders einfache Konstruktionsverhältnisse können dadurch erreicht werden, daß die verstellbar gelagerten Träger der Endlosförderer in einer quer zur Verstellrichtung verlaufenden, gestellfesten Kulissenführung geführt sind, die die gewünschte Trägerverstellung in Abhängigkeit vom Fahrweg des Längsschlittens erzwingt. Die Träger müssen ja dem Kulissenverlauf folgen, so daß jede Abweichung des Kulissenverlaufes von der Verstellrichtung des Schlittens eine Querbewegung der Träger ergibt.

Der Antrieb der Endlosförderer kann auf unterschiedliche Weise durchgeführt werden, da es lediglich darauf ankommt, daß die Förderelemente unabhängig von einer Verstellung der Träger ausschließlich die für eine Werkstückbewegung in Querrichtung erforderlichen Förderwege gegenüber dem Längsschlitten durchlaufen. Besonders vorteilhafte Bedingungen werden allerdings erhalten, wenn die Fördertrume der umlaufenden Förderelemente der Endlosförderer an einem gemeinsamen Stelltrieb angeschlossen sind. Werden die Fördertrume über den Stelltrieb festgehalten, so können die Träger der Endlosförderer beliebig verstellt werden, ohne den Antrieb der Endlosförderer zusätzlich steuern zu müssen.

Der Stelltrieb kann aus einem in Förderrichtung der Endlosförderer auf dem Längsschlitten verschiebbar gelagerten, antreibbaren Mitnehmer für die umlaufenden Förderelemente bestehen. Wird der mit den Förderelementen der Endlosförderer verbundene Mitnehmer als Querschlitten ausgebildet, so kann die Werkstückbewegung über den Querschlitten in herkömmlicher Weise gesteuert werden, und zwar mit allen angegebenen Vorteilen.

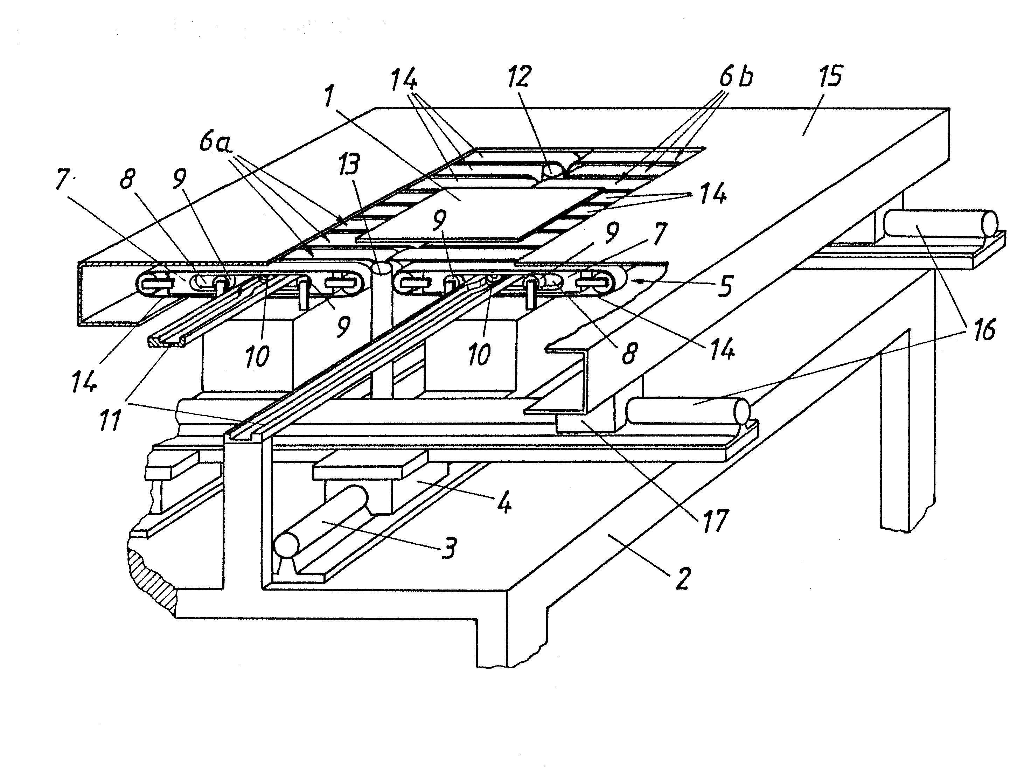

In der Zeichnung ist der Erfindungsgegenstand beispielsweise dargestellt. Es wird eine erfindungsgemäße Vorrichtung zum Zuführen plattenförmiger Werkstücke zu einer Werkzeugmaschine in einem vereinfachten, zum Teil aufgerissenen Schaubild gezeigt.

Die Vorrichtung zum Zuführen plattenförmiger Werkstücke 1 zu einer Werkzeugmaschine besteht gemäß dem Ausführungsbeispiel im wesentlichen aus einem auf einem Gestell 2 entlang einer Geradführung 3 verfahrbaren Längsschlitten 4, auf dem ein Querförderer 5 für die Werkstücke 1 gelagert ist. Dieser Querförderer 5 weist eine Mehrzahl von paarweise nebeneinandergereihten Endlosförderern 6a und 6b auf, deren Träger 7 in Förderrichtung verstellbar auf dem Längsschlitten 4 gelagert sind. Zu diesem Zweck sind die Träger 7 mit Führungsschlitzen 8 versehen, in die auf dem Längsschlitten 4 abgestützte Tragrollen 9 eingreifen. Die Träger 7 sind außerdem mit Führungsrollen 10 versehen, die in einer aus zwei Schienen bestehenden, auf dem Gestell 2 vorgesehenen Kulissenführung 11 geführt sind. Bei einer Verstellung des Längsschlittens 4 entlang der Geradführung 3 werden demnach die in Förderrichtung hintereinander angeordneten Endlosförderer 6a, 6b jedes Paares von Endlosföraerern entsprechend dem Kulissenverlauf auseinandergestellt oder zusammengeführt. Es wird daher möglich, im Bereich des Querförderers 5 beispielsweise ein Gegenwerkzeug 12 oder ein Gasabzugsrohr 13 für ein Plasmaschneidgerät anzuordnen, weil im Bereich dieser ortsfesten Konstruktionsteile die Endlosförderer 6a und 6b zur Schaffung eines ausreichenden Arbeitsraumes auseinanderbewegt werden können, und zwar über die Verstellung der Träger 7 gegenüber dem Längsschlitten 4.

Zum Antrieb der Endlosförderer 6a, die im Ausführungsbeispiel Förderbänder als umlaufende Förderelemente 14 aufweisen, dient ein Stelltrieb, der aus einem rahmenförmigen Mitnehmer 15 für die Fördertrume der Förderelemente 14 besteht. Zu diesem Zweck ist der Mitnehmer 15 mit den einzelnen Fördertrumen der Förderelemente 14 antriebsverbunden, so daß bei einer Verstellung des auf einer Führung 16 des Längsschlittens 4 in Förderrichtung des Querförderers 5 verschiebbar geführten Mitnehmers 16 das jeweilige Werkstück 1, das vollständig oder zum Teil auf den Endlosförderern 6a und 6b aufliegt, mit dem Mitnehmer 16 bewegt wird, und zwar schlupffrei, was jede eine Oberflächenbeschädigung verursachende Relativbewegung zwischen dem Werkstück 1 und dem Querförderer 5 ausschließt. Bei einer Verschiebung des Längsschlittens 4 und einer damit verbundenen Verstellung der Träger 7 der Endlosförderer 6a und 6b ergibt sich zwar zwischen den Endlosförderern 6a und 6b ein entsprechender Abstand zur Aufnahme der im Bereich der Bewegungsbahn der Endlosförderer 6a und 6b befindlichen Konstruktionsteile, doch ist mit dem Auseinanderstellen der Endlosförderer 6a und 6b keine Verschiebebewegung des Werkstückes 1 auf den Fördertrumen der Förderelemente 14 verbunden, weil diese Fördertrume 14 von dem Mitnehmer 15 festgehalten werden.

Wie das Ausführungsbeispiel zeigt, bildet der Mitnehmer 15 einen Querschlitten 17, über den die Querverstellung der Werkstücke 1 in üblicher Weise gesteuert werden kann. Die Bewegung des Querschlittens 17 entspricht ja der Werkstückbewegung.

Patentansprüche :

1. Vorrichtung zum Zuführen plattenförmiger Werkstücke (1) zu einer Werkzeugmaschine, bestehend aus einem Gestell (2) und einem entlang einer Geradführung (3) auf dem Gestell (2) verfahrbaren Längsschlitten (4), der einen Querförderer (5) für die Werkstücke (1) trägt, dadurch gekennzeichnet, daß der Querförderer (5) wenigstens zwei in Förderrichtung hintereinander angeordnete, ein Auflager für die Werkstücke (1) bildende Endlosförderer (6a, 6b) umfaßt, die mit einem für den Werkzeugeinsatz der Werkzeugmaschine ausreichenden Abstand voneinander angeordnet sind oder von denen wenigstens einer auf einem Träger (7) gelagert ist, der in Förderrichtung der Endlosförderer (6a, 6b) auf dem Längsschlitten (4) verstellbar geführt ist.

2. Vorrichtung nach Anspruch 1, dadurch gekennzeichnet, daß mehrere einander paarweise gegenüberliegende Endlosförderer (6a, 6b) mit je einem verstellbaren Träger (7) vorgesehen sind.

3. Vorrichtung nach Anspruch 1 oder 2, dadurch gekennzeichnet, daß die verstellbar gelagerten Träger (7) der Endlosförderer (6a, 6b) in einer quer zur Verstellrichtung verlaufenden, gestellfesten Kulissenführung (11) geführt sind.

4. Vorrichtung nach einem der Ansprüche 1 bis 3, dadurch gekennzeichnet, daß die Fördertrume der umlaufenden Förderelemente (14) der Endlosförderer (6a, 6b) an einem gemeinsamen Stelltrieb angeschlossen sind.

5. Vorrichtung nach Anspruch 4, dadurch gekennzeichnet, daß der Stelltrieb aus einem in Förderrichtung der Endlosförderer (6a, 6b) auf dem Längsschlitten (4) verschiebbar gelagerten, antreibbaren Mitnehmer (15) für die umlaufenden Förderelemente (14) besteht.

0151913

6.    Vorrichtung nach Anspruch 5, dadurch gekennzeichnet, daß der mit den umlaufenden Förderelementen (14) der Endlosförderer (6a, 6b) verbundene Mitnehmer (15) als Querschlitten (17) ausgebildet ist.

7/7

0151913